# EUROPEAN PATENT SPECIFICATION

(11) **EP 0 950 459 B1**
(45) Date of publication and mention of the grant of the patent: **04.06.2003**
(21) Application number: 99107166.3
(22) Date of filing: 13.04.1999
(51) Int. Cl.: B23K 9/29

(54) **Welding torch with gas supply control valve fitted to the torch wall downstream of the electricity supply connector**
Schweissbrenner mit einem an der Brennerwand eingebauten Gasversorgungssteuerventil stromabwärts des Elektrizitätsversorgungssteckers
Torche de soudage avec une soupape de commande adaptée à la paroi de la torche en aval du connecteur d'alimentation en électricité

(30) Priority: 15.04.1998 IT VI980031 U
(43) Date of publication of application: 20.10.1999
(73) Proprietor: TRAFIMET S.P.A., 36020 Castegnero (VI) (IT)
(72) Inventor: Zigliotto, Giuseppe, 36023 Longare VI (IT)
(74) Representative: De Gregori, Antonella

(56) References cited:
- DE-A- 19 619 693
- FR-A- 2 632 883
- US-A- 3 557 337

## Description

This innovation relates to a welding torch, in particular for MIG-MAG welding, in which the gas supply pipe leads to a stop valve fitted to the side of the torch body downstream of the wire and electricity supply connector.

This valve is preferably activated directly by the torch button so as to open the gas flow a moment before the electrical contact is closed.

The torch in accordance with the innovation is characterised by the special conformation and arrangement of its parts, which produces a highly practical product that is easier to assemble, lighter and cheaper to manufacture than known products.

Continuous-wire welding processes, in which the electrode is replaced by a wire pushed continually forward that melts to deposit material on the parts to be welded, are normally conducted in a protected atmosphere, a given quantity of gas being supplied to the welding zone.

The purpose of this gas, normally constituted by carbon dioxide or mixtures of argon or other gases, is to create a preferential route for the arc and protect the "welding bath".

The torches consequently have a pipe connected to a gas supply source which includes a solenoid valve designed to cut off the gas flow, only opening the gas supply pipe when welding is effected.

This solenoid valve is usually located on the welding generator, ie. at a distance from the torch; this involves the drawback that when welding begins, the gas has to travel the whole length of the pipe as far as the torch, and a short interval therefore elapses between the moment when gas is supplied to the torch and the moment when the arc is formed, resulting in rapid wear of the electrode and imperfect initial welding.

Various welding torches have been designed and constructed to eliminate this drawback, one of which comprises a valve that opens and closes the gas supply pipe, activated by the button that also opens and closes the electricity supply circuit.

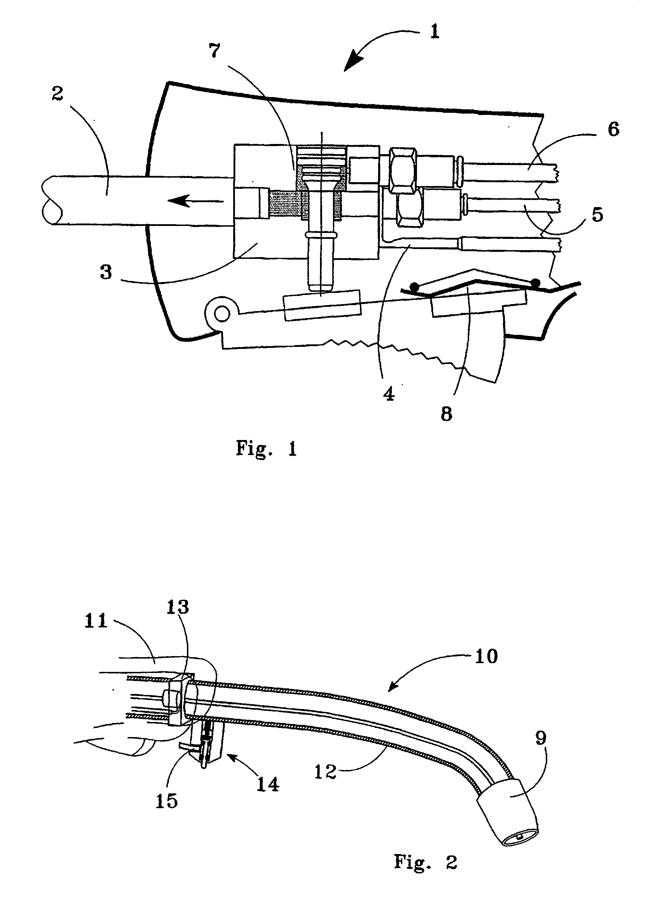

One of these known solutions is schematically illustrated in figure 1, in which number 1 indicates the torch body; pipe 2, connected to torch body 1, supplies wire and gas to the welding area.

Inside the said torch there is a block 3 made of metal such as brass; an electricity supply cable 4 and two pipes 5 and 6, which supply welding wire and gas respectively, are connected to the said block.

Block 3 contains a valve 7 which moves between a lowered position in which it closes the gas supply and opens the electrical contact 8 and a raised position illustrated in figure 1 in which it closes the electricity supply contact and opens the gas supply, allowing the fluid to flow along pipe 2 which also supplies the welding wire.

Although this solution offers satisfactory results, it can be further improved. This known solution requires the use of a metal block large enough to take all the connections and contain the valve, which involves an increase in torch weight and manufacturing costs.

Torches have also been designed which are similar to the one described above, but with a plastic block.

However, this system offers low resistance to mechanical stresses, with the result that the threaded part with the gas and wire supply connectors is weakened; the electricity supply cable must also bypass this block and be connected to pipe 2 downstream of the block in order to achieve the necessary electrical continuity, as plastic, of which the block is made, is an insulating material.

The above drawbacks are now eliminated by a torch in accordance with claim 1.

This innovation will now be described in detail, by way of example but not of limitation, by reference to the following figures in which:
- figure 2 schematically illustrates a welding torch in accordance with the innovation
- figure 3 is a cross-section of the gas supply valve in the closing position, in a torch in accordance with the innovation
- figure 4 illustrates the valve shown in figure 3, in the open position.

With reference to figure 2, no. 10 indicates the torch body assembly, which comprises a handgrip 11 and a torch body 12 basically constituted by a metal tubular element with a connector or union 13 on one side for connection to the welding wire and electricity supply pipes, and a nozzle 9 on the other side.

Connector 13, designed for connection to the welding wire and electricity supply, is of known type, and will therefore not be illustrated in detail.

A characteristic feature of the invention is that it includes a valve, indicated as 14, downstream of the said connector 13; the said valve contains a threaded hole 15 for connection to a gas supply pipe, and is fitted to the wall of torch body 12, downstream of connector 13.

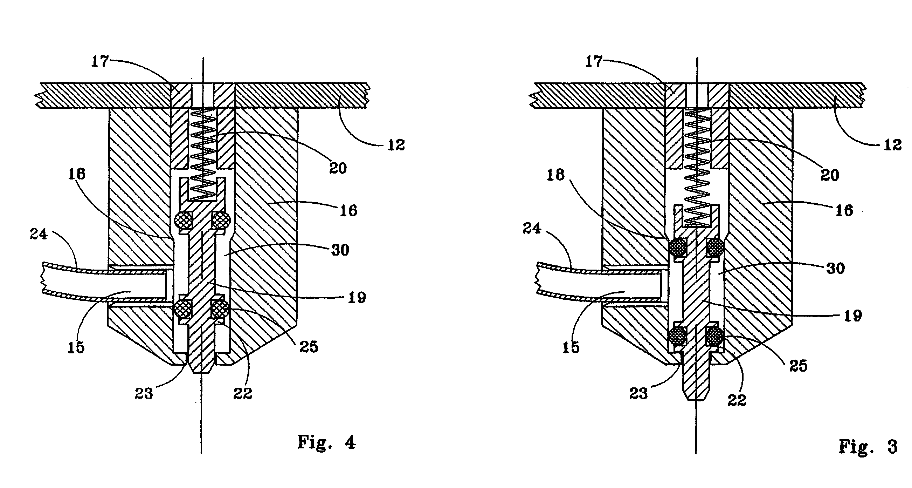

Valve 14 (fig. 3) comprises a body 16 which may, for example, be basically cylindrical; a connector 17 used to fit valve body 16 to torch body 12 is screwed into an axial hole (30) in the said valve body.

This axial hole (30) communicates with threaded hole 15 through which gas is supplied from a pipe 24, the end of which is screwed to the thread of hole 15.

Connector 17 has a central hole which places the interior of valve body 16 in communication with the torch body.

The inner part of valve body 16 presents a step 18 which divides the axial hole into two areas of different diameters, the lower area having the smaller diameter.

A piston 19 slides in the part of body 16 with the smaller diameter; the said piston is fitted with a pair of O-ring seals 25 and can travel between the position illustrated in figure 3, in which the said O-rings cut off the gas flow aperture, and the raised position shown in figure 4, in which they open the said aperture, allowing the gas to flow into the valve pipe and then pass into torch body 12.

A helical spring 20 or the like normally maintains piston 19, which acts as the valve plug, in the closed position, preventing gas from escaping from the ring-shaped chamber formed between this piston and the inner wall of valve body 16.

The lower end of piston 19 normally projects from body 16 and is driven by the torch activation button, which first pushes the piston upwards, and then closes the electricity supply contacts.

The mechanism operates as follows: in the rest position, spring 20 pushes piston 19 downwards, until lower shoulder 22 comes to rest against circular rim 23 of body 16.

The two ends of ring-shaped chamber 30 are then closed by the O-rings, and gas cannot escape from body 16.

When the torch button is pressed to start welding, it pushes piston 19 upwards until the upper shoulder with the corresponding O-ring is above step 18, as shown in figure 4, thus opening an aperture which allows gas to flow freely along the whole of the axial pipe in body 16, pass through the hole in connector 17, and flow into torch body 12.

When welding is stopped by releasing the button, the piston is pushed back downwards by spring 20 to close the aperture and at the same time cut off the electricity supply.

The small amount of gas remaining in pipe 12 continues to insulate the area around the weld to guarantee a perfect, defect-free result.

Various forms of embodiment of the torch could be devised, without departing from the scope of this invention as defined in the claims. The dimensions and the materials used could also be varied in accordance with practical requirements.

## Claims

1. A Welding torch of the type comprising a gas supply control valve (14) connected to a gas supply pipe (24), **characterized by** said valve being a needle valve activated by the touch button, wherein said valve is fitted to the wall of the torch body (12) downstream of the electricity and welding wire supply connectors.

2. A Welding torch as claimed in claim 1, in which the torch button opens the said valve and subsequently closes the electricity supply contact.

3. A Welding torch as claimed in claim 1, **characterised by** the fact that the said valve comprises:
• a body (16) containing an axial hole (30), which said valve body (16) is fitted to the side of the torch body (12) and communicates with the interior of the said torch body;
• a piston (19) which slides inside the said axial hole (30) and presents a ring-shaped groove that forms a ring-shaped chamber inside the said hole, the said piston being designed to move between a first position in which it partly projects from the said body (16) and a second position in which it retracts fully into the said body, the said body being fitted with a connector for a gas supply pipe (24) which leads to the said ring-shaped chamber formed by the said piston
• means (20) which push the said piston into the position in which it partly projects from the body of the said valve
• the said axial hole (30) in the said valve body presents two areas of different diameters; the ring-shaped chamber formed by the said piston is bounded at the top and bottom by seals (25) which slide together with the piston and move from (i) a position in which they both form a seal against the walls of the said axial pipe (30) when the piston (19) is in the position in which it projects from the said valve body (16) to (ii) a second position in which one of the said seals moves to the larger-diameter section of the said axial pipe to open the aperture between the said ring-shaped chamber and the axial pipe that connects it to the interior of the torch body.

## Patentansprüche

1. Schweißbrenner des Typs mit einem Gasversorgungssteuerventil (14), das mit einem Gasversorgungsrohr (24) verbunden ist,
**dadurch gekennzeichnet**
**dass** das Ventil ein Nadelventil ist, das durch den Brennerknopf aktiviert wird, wobei das Ventil an der Wand des Brennerkörpers (12) unterstromig der Elektrizitäts- und Schweißdrahtversorgungsverbinder vorgesehen ist.

2. Schweißbrenner nach Anspruch 1,
wobei der Brennerknopf das Ventil öffnet und nachfolgend den Elektrizitätsversorgungskontakt schließt.

3. Schweißbrenner nach Anspruch 1,
**dadurch gekennzeichnet,**
**dass** das Ventil umfasst:
• einen Körper (16) mit einem axialen Loch (30), wobei der Ventilkörper (16) an der Seite des Brennerkörpers (12) vorgesehen ist und mit dem Innenraum des Brennerkörpers in Verbindung steht;
• einen Kolben (19), der in dem axialen Loch (30) gleitet und eine ringförmige Nut aufweist, die eine ringförmige Kammer innerhalb des Loches bildet, wobei der Kolben derart ausgebildet ist, um zwischen einer ersten Position, in der er teilweise von dem Körper (16) vorragt, und einer zweiten Position bewegbar zu sein, in der er vollständig in den Körper zurückgezogen ist, wobei der Körper mit einem Verbinder für ein Gasversorgungsrohr (24) ausgerüstet ist, das zu der ringförmigen Kammer führt, die durch den Kolben ausgebildet ist,
• ein Mittel (20), das den Kolben in die Position drückt, in der dieser teilweise von dem Körper des Ventils vorragt;
• wobei das axiale Loch (30) in dem Ventilkörper zwei Bereiche mit unterschiedlichen Durchmessern aufweist; wobei die ringförmige Kammer, die durch den Kolben gebildet ist, an dem oberen und unteren Bereich durch Dichtungen (25) begrenzt ist, die zusammen mit dem Kolben gleiten und sich von (i) einer Position, in der sie beide eine Dichtung gegen die Wände des axialen Rohres (30) bilden, wenn sich der Kolben (19) in der Position befindet, in der er von dem Ventilkörper (16) vorragt, zu (ii) einer zweiten Position bewegen, in der sich eine der Dichtungen zu dem Abschnitt mit größeren Durchmesser des axialen Rohres bewegt, um die Öffnung zwischen der ringformigen Kammer und dem axialen Rohr zu öffnen, das dieses mit dem Innenraum des Brennerkörpers verbindet.

## Revendications

1. Chalumeau soudeur du type comprenant une vanne de régulation d'alimentation en gaz (14) connectée à un tuyau d'alimentation en gaz (24), **caractérisé en ce que** ladite vanne est une vanne à pointeau activée par le bouton du chalumeau, dans lequel ladite vanne est ajustée à la paroi du corps du chalumeau (12) en aval des connecteurs d'alimentation en électricité et en fil à souder.

2. Chalumeau soudeur selon la revendication 1, dans lequel le bouton du chalumeau ouvre ladite vanne et ferme ultérieurement le contact d'alimentation en électricité.

3. Chalumeau soudeur selon la revendication 1,
**caractérisé en ce que** ladite vanne comprend :
- un corps (16) contenant un trou axial (30), lequel dit corps de vanne (16) est ajusté sur le côté du corps du chalumeau (12) et communique avec l'intérieur dudit corps du chalumeau ;
- un piston (19) qui glisse à l'intérieur dudit trou axial (30) et présente une rainure façonnée en anneau qui forme une chambre façonnée en anneau à l'intérieur dudit trou, ledit piston étant conçu pour se déplacer entre une première position dans laquelle il se projette en partie à partir dudit corps (16) et une deuxième position dans laquelle il se rétracte entièrement dans ledit corps, ledit corps étant ajusté avec un connecteur pour un tuyau d'alimentation en gaz (24) qui conduit à ladite chambre façonnée en anneau formée par ledit piston ;
- un moyen (20) qui pousse ledit piston dans la position dans laquelle il se projette en partie à partir du corps de ladite vanne ;
- ledit trou axial (30) dans ledit corps de vanne présente deux zones de diamètres différents ; la chambre façonnée en anneau formée par ledit piston est limitée en haut et en bas par des joints d'étanchéité (25) qui coulissent conjointement avec le piston et se déplacent (i) d'une position dans laquelle ils forment tous deux une étanchéité contre les parois de ladite conduite axiale (30) quand le piston (19) est dans la position dans laquelle il se projette dudit corps de vanne (16) à (ii) une deuxième position dans laquelle un desdits joints d'étanchéité se déplace vers la section à diamètre plus grand de ladite conduite axiale afin d'ouvrir l'ouverture entre ladite chambre façonnée en anneau et la conduite axiale qui le connecte à l'intérieur du corps du chalumeau.
